# EUROPÄISCHE PATENTSCHRIFT

(11) **EP 3 420 864 B1**
(45) Veröffentlichungstag und Bekanntmachung des Hinweises auf die Patenterteilung: **16.09.2020**
(21) Anmeldenummer: 17178575.1
(22) Anmeldetag: 29.06.2017
(51) Int. Cl.: A47J 36/06, A47J 36/32

(54) **KÜCHENMASCHINE MIT EINEM MESSEBECHER MIT SENSOREN ZUR ERMITTLUNG EINES BETRIEBSZUSTANDES**
FOOD PROCESSOR WITH A MEASURING CUP COMPRISING SENSORS FOR DETECTING AN OPERATING CONDITION
ROBOT MÉNAGER AVEC UNE COUPE DE MESURE COMPRENANT CAPTEURS POUR DÉTERMINER UN ÉTAT DE FONCTIONNEMENT

(43) Veröffentlichungstag der Anmeldung: 02.01.2019
(73) Patentinhaber: Vorwerk & Co. Interholding GmbH, 42275 Wuppertal (DE)
(72) Erfinder: Hackert, Georg, 44869 Bochum (DE)
(74) Vertreter: Müller, Enno

(56) Entgegenhaltungen:
- WO-A1-2010/044286
- WO-A1-2014/190160
- DE-A1-102014 108 928
- US-A1- 2009 223 385
- US-A1- 2016 345 610

## Beschreibung

### Gebiet der Technik

Die Erfindung betrifft ein Zusatzteil, nämlich Messbecher zum Aufsetzen auf ein Gargefäß einer Küchenmaschine, wobei der Messbecher ein einen Boden aufweisendes Messvolumen aufweist.

Die Erfindung betrifft darüber hinaus eine Küchenmaschine mit einem Gefäß und einem Zusatzteil zum Aufsetzen auf das Gargefäß, wobei das Zusatzteil eine Sensoranordnung zur Ermittlung mindestens eines Betriebszustandes im Gargefäß aufweist.

### Stand der Technik

Ein Messbecher, der auf einen Deckel, der ein Gargefäß einer Küchenmaschine verschließt, aufsetzbar ist, um eine Öffnung des Deckels zu verschließen ist aus der DE 10 2014 111 216 A1 vorbekannt. Der Messbecher besitzt einen Boden und eine darüber angeordnete Höhlung, die als Messvolumen verwendbar ist. Ein als Schirm ausgebildeter Kragen überdeckt die Öffnung, so dass das Zusatzteil auch als Spritzschutz wirkt.

Im Stand der Technik sind darüber hinaus auch Sensoren zur Detektion von Wärme, Bildauswertung, Abstandsmessungen oder dergleichen bekannt. Darüber hinaus gibt es Lesegeräte, mit denen RFID-Transponder erkannt und deren Identifikationsnummer ausgelesen werden können. Es ist ferner bekannt, Daten drahtlos via Bluetooth zu übertragen. Es wurde ferner bereits vorgeschlagen, Temperaturen eines Gargutes innerhalb eines Gargefäßes zu messen und die Messwerte drahtlos an eine mobiles Endgerät zu übertragen.

### Zusammenfassung der Erfindung

Der Erfindung liegt die Aufgabe zugrunde, ein Zusatzteil für eine Küchenmaschine, welches ein Funktionsteil, nämlich ein Messbecher ist, gebrauchsvorteilhaft weiterzubilden.

Gelöst wird die Aufgabe durch die in den Ansprüchen angegebene Erfindung.

Erfindungsgemäß wird vorgeschlagen, dass das Zusatzteil eine Sensoranordnung aufweist, mit der ein Betriebszustand insbesondere innerhalb des Gargefäßes ermittelt werden kann. Dieser Betriebszustand kann eine Temperatur, eine Füllhöhe des Gargutes innerhalb des Gargefäßes, die Anwesenheit eines in das Gargefäß eingesetzten Einsatzbehälters, das Vorhandensein eines Rührwerkes oder eines auf das Rührwerk aufgesetzten Rühraufsatzes, das Gewicht einer in der Höhlung des Messbechers angeordneten Masse oder die Drehzahl einer Messeranordnung sein. Es ist insbesondere vorgesehen, dass das Zusatzteil ein Abdeckteil oder Spritzschutz ist, um eine Öffnung eines auf das Gargefäß aufgesetzten Deckels zu verschließen. Mit der Sensoranordnung kann insbesondere auch ermittelt werden, ob das Abdeckteil die Öffnung verschließt. Die Sensoranordnung, die bevorzugt in einem Boden des als Messbecher ausgebildeten Zusatzteiles angeordnet ist, wobei insbesondere vorgesehen ist, dass der Boden durch eine Deckelöffnung in das Gargefäß hineinragt, kann Sensoren aufweisen, die eine Kamera ausbilden, einen Infrarotsensor, einen Ultraschallentfernungsmesser, ein Thermometer, einem IR-Sensor oder dergleichen. Erfindungsgemäß wird ein Zusatzteil, welches eine mechanische Funktion an einer Küchenmaschine ausübt mit ergänzenden Sensormitteln ausgebildet, die dem Zusatzteil gewissermaßen eine eigene Intelligenz verleihen. Mit den Sensoren der Sensoranordnung ist es möglich, dass das Zusatzteil unmittelbar Zustände innerhalb oder außerhalb des Gargefäßes erfasst. Die von der Sensoranordnung ermittelten Zustände werden als Daten an eine Steuerelektronik der Küchenmaschine übermittelt. Das Zusatzteil besitzt hierzu einen Sensor und die Küchenmaschine einen Empfänger. Die drahtlose Datenübertragung kann via Bluetooth oder einem anderen geeigneten Protokoll erfolgen. Hierdurch ist es möglich, dass der Benutzer der Küchenmaschine gewarnt werden kann, wenn ein für die Zubereitung einer Speise erforderliches Bauteil, beispielsweise ein Rührwerk, ein Rührwerkaufsatz, ein Einsatzbehälter fehlt. Der Benutzer kann auch vor zu hohem Füllstand innerhalb des Gargefäßes gewarnt werden. Der Benutzer kann auch darauf hingewiesen werden, dass das Zusatzteil selbst seine bestimmungsgemäße mechanische Funktion nicht ausübt, beispielsweise als Abdeckteil eine Deckelöffnung nicht verschließt. Es ist vorgesehen, dass die Sensoranordnung energetisch autark arbeitet und hierzu einen Akkumulator aufweist. Es können Mittel vorgesehen sein zur drahtlosen Ladung des Akkumulators. Beispielsweise kann im Deckel eine Induktionsspule angeordnet sein, die als Primärspule eines Transformators arbeitet. Im Zusatzgerät kann eine Sekundärspule angeordnet sein, die in der bestimmungsgemäßen Position des Zusatzteiles an der Küchenmaschine zusammen mit der Primärspule einen Transformator ausbildet, so dass Energie an das Zusatzteil übertragen werden kann. Die elektronischen Komponenten sind wasserdicht im Zusatzteil verbaut. Hierzu kann bspw. der Boden des als Messbecher ausgebildeten Zusatzteiles eine Höhlung aufweisen, in die die elektronischen Komponenten eingesetzt sind. Die Höhlung kann mit einer geeigneten Masse vergossen sein, die derart wasserdicht ist, dass das Zusatzteil in einer Spülmaschine gereinigt werden kann. Es ist ferner vorgesehen, dass die vom Zusatzteil erfassten Daten von einer Steuerschaltung einer Küchenmaschine verwendet werden, um den Betriebszustand der Küchenmaschine zu beeinflussen, bspw. um eine Temperaturveränderung oder Drehzahlveränderung des Rührwerkes durchzuführen. Es kann ferner vorgesehen sein, dass die elektronische Steuerschaltung im Zusatzgerät einen Programm gesteuerten Mikrokontroller aufweist, der in der Lage ist, qualifiziert oder quantifiziert auf Messwerte zu reagieren. Mit der erfindungsgemäßen Ausgestaltung lässt sich das Garergebnis verbessern und lassen sich Fehlbenutzungen vermeiden. Eine falsche Bestückung des Gerätes kann erkannt werden, wenn mit der Küchenmaschine nach einem vorgegebenen Programm gearbeitet wird, welches die Anwesenheit bspw. eines Rühraufsatzes oder eines Einsatzbehälters verlangt.

### Kurze Beschreibung der Zeichnungen

Ein Ausführungsbeispiel der Erfindung wird nachfolgend anhand beigefügter Zeichnungen erläutert. Es zeigen:

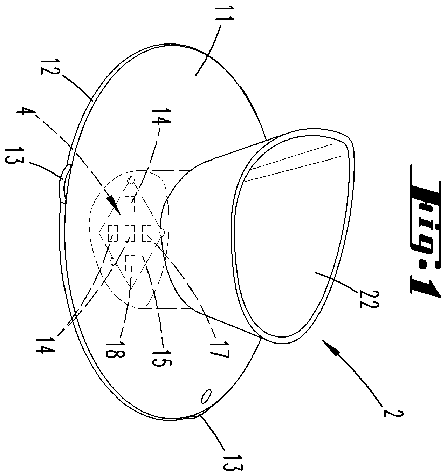

- Fig. 1: Ein als Messbecher oder Abdeckteil mit Spritzschutzschirm L ausgebildetes Zusatzteil für eine Küchenmaschine,

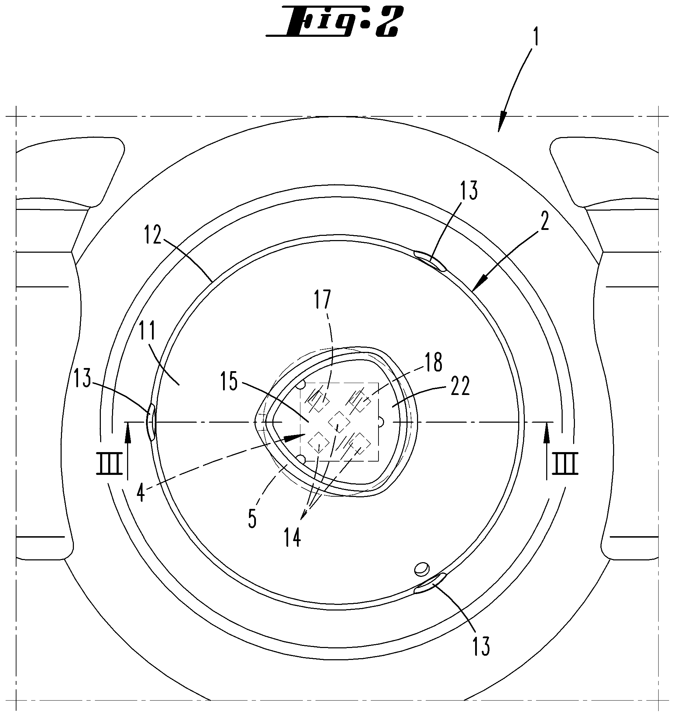

- Fig. 2: die Draufsicht auf die Küchenmaschine,
- Fig. 3: einen Schnitt gemäß der Linie III-III des Zusatzteiles 2, jedoch aufgesetzt auf das Gargefäß 3 einer Küchenmaschine 1;
- Fig. 3a: vergrößerter Ausschnitt IIIa in Figur 3 und
- Fig. 4: eine Darstellung gemäß Fig. 1, jedoch mit einer anderen Bestückung des Gargefäßes 3.

### Beschreibung der Ausführungsformen

Beim Ausführungsbeispiel bildet das Zusatzteil 2 ein kombiniertes Messbecher-Abdeckteil aus, das auf einen Deckel 6, der das Gargefäß 3 verschließt, aufgesetzt werden kann. Es ist ein als Schirm 11 ausgebildeter Randbereich vorgesehen, der den Rand der Öffnung 5 im Deckel 6 überfangen kann. Der Schirm besitzt einen Rand 12, von dem Abstandselemente 13 abragen, die auf der Deckeloberfläche aufliegen, um so den Rand 12 von der Deckeloberfläche zu beabstanden.

Der Schirm 11 umgibt einen nach oben offenen Hohlkörper, der eine Höhlung 22 ausbildet, die einen Boden 20 aufweist. Der Boden 20 kann an einem unteren Abschnitt des die Höhlung 22 ausbildenden Teils des Messbechers 2 angeordnet sein, der durch die Öffnung 5 in das Gargefäß 3 hineinragt. Die Höhlung 22 bildet ein Messvolumen aus.

Der Boden 20 besitzt eine Höhlung 19, in der eine Sensoranordnung 4 angeordnet ist. Es handelt sich dabei um eine Platine 15, die zumindest einen Sensor 14 trägt. Die Platine kann darüber hinaus einen Sender 17 tragen, der in der Lage ist, Daten an einen Empfänger 16 zu übertragen, der in der Küchenmaschine 1 angeordnet ist. Die vom Empfänger 16 empfangenen Daten werden an eine elektronische Steuerschaltung der Küchenmaschine weitergeleitet.

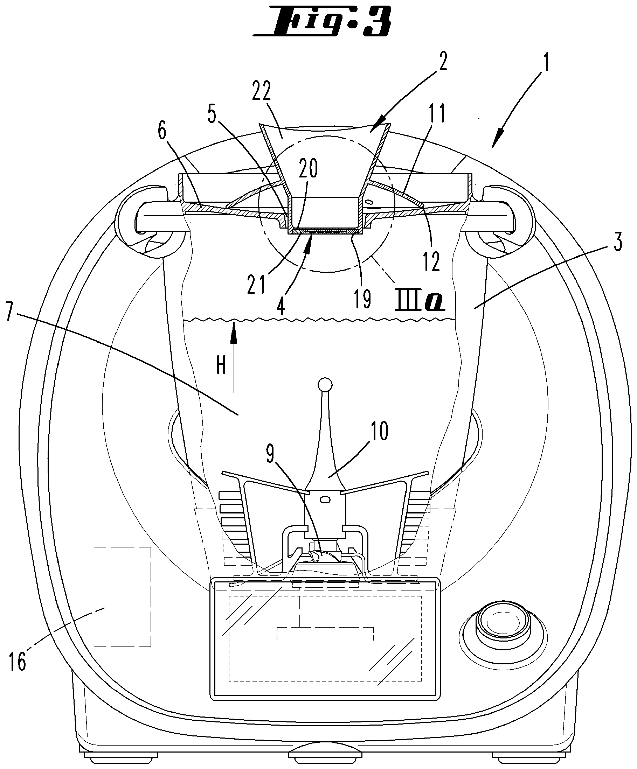

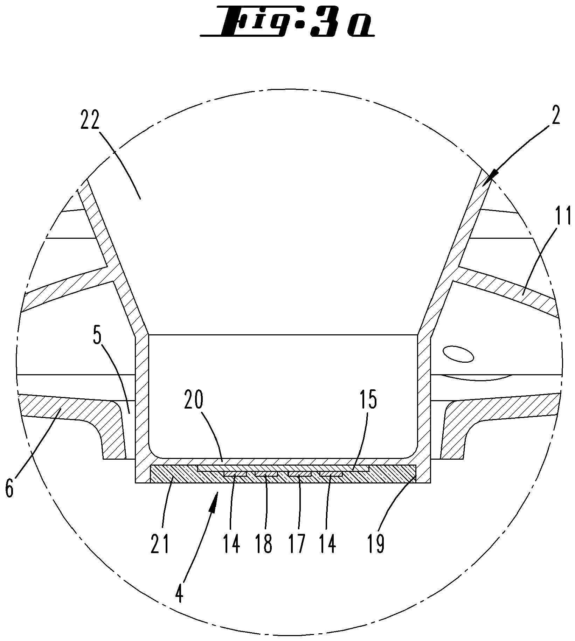

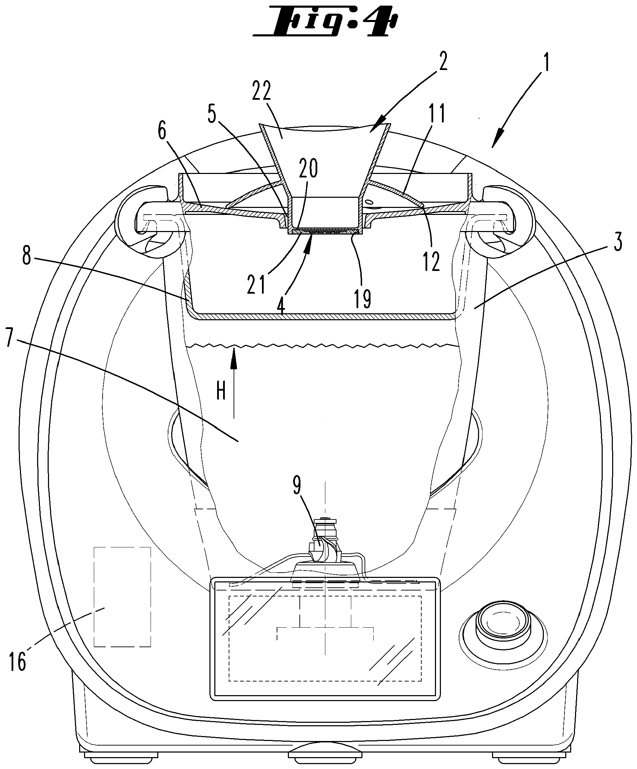

Die Sensoren 14 können einen Abstandssensor bspw. einen Ultraschallsender umfassen, mit dem der Füllstand H eines Gargutes innerhalb eines Gargefäßes 3 ermittelt werden kann. Die Sensoren 14 können einen Sensor aufweisen, der in der Lage ist die Temperatur des Gargutes im Gargefäß 3 zu ermitteln, bspw. kann es sich um einen IR-Sensor oder ein Thermometer handeln. Die Sensoren 14 können darüber hinaus einen bildgebenden Sensor aufweisen, bspw. eine Kamera, mit der Gerätschaften, die sich innerhalb des Gargefäßes 3 befinden, ermittelt werden, so kann mit einem Sensor 14 bspw. ermittelt werden, ob ein in der Figur 3 dargestellter Rühraufsatz 10 auf einem Rührwerk 9 aufgesetzt ist oder ob das Rührwerk 9 vorhanden ist. Ferner kann mit einem der Sensoren 14 festgestellt werden, ob ein Einsatzbehälter 8, wie in der Figur 4 dargestellt ist, in das Gargefäß 3 eingesetzt worden ist. Ferner ist es möglich, mit einem Sensor 14 zu erkennen, ob das Zusatzteil 2 seine bestimmungsgemäße Position als Abdeckteil 2 der Öffnung 5 des Deckels 6 einnimmt.

Die Messwerte der Betriebszustände werden drahtlos bspw. über ein Bluetooth-Protokoll an die Küchenmaschine übertragen, die auf einem Display Fehlermeldungen oder dergleichen anzeigen kann. Die von der Sensoranordnung übermittelten und an die Küchenmaschine 1 übertragenen Daten können darüber hinaus verwendet werden, um die Steuerung der Küchenmaschine 1 zu beeinflussen, dies ist insbesondere dann von Vorteil, wenn die Küchenmaschine 1 einen automatischen Garprozess nach einem Programm abarbeitet.

Ferner kann vorgesehen sein, dass das als Messbecher ausgebildete Zusatzteil 2 einen Waage-Sensor aufweist mit den eine in das Messvolumen 22 eingefüllte Masse bspw. einer zuzugebenden Zutat bestimmt werden kann. Die vom Gewichtssensor ermittelten Daten werden drahtlos an die Steuerelektronik der Küchenmaschine übertragen und können auf einem Display als Zahlen dargestellt werden.

Mit dem Zusatzgerät ist ein berührungslose Anwesenheitserkennung von Zubehörteilen der Küchenmaschine 1 möglich. Es ist eine berührungslose Messung von Zustandsgrößen des Gargutes bspw. dessen Temperatur möglich. Die gemessenen Zustandsgrößen des Gargutes können als Steuerungsparameter für eine programmgesteuertes Rezept verwendet werden. Ferner kann eine Fehlbestückung oder Fehlbedienung erkannt werden.

Indem die gesamten Elektronikkomponenten im aus Kunststoff bestehenden Zusatzteil 2 wasserdicht gekapselt sind, kann das Zusatzteil 2 in einer Spülmaschine gereinigt werden.

Zur Energieversorgung bzw. Energiespeicherung kann innerhalb des Zusatzteiles 2 ein Akkumulator 18 vorgesehen sein. Es können Mittel vorgesehen sein, mit denen der Akkumulator 18 drahtlos, bspw. über miteinander zusammenwirkende Spulen gelagert werden. Eine Primärspule kann bspw. im Deckel 6 angeordnet sein und in einer Sekundärspule des Messbechers 2 eine Spannung zur Ladung des Akkumulators 18 induzieren.

Bei denen in der Figur 3 dargestellten Bestückung des Gargefäßes 3 kann beispielsweise erfasst werden, ob ein Rühraufsatz 10 auf ein Rührwerk 9 aufgesetzt ist. Bei der in Figur 4 dargestellten Bestückung kann beispielsweise überprüft werden, ob ein Einsatzbehälter 8 vorhanden ist.

### Liste der Bezugszeichen

- 1: Küchenmaschine
- 2: Zusatzteil
- 3: Gargefäß
- 4: Sensoranordnung
- 5: Öffnung
- 6: Deckel
- 7: Gargut
- 8: Einsatzbehälter
- 9: Rührwerk
- 10: Rühraufsatz
- 11: Schirm
- 12: Rand
- 13: Abstandselement
- 14: Sensor
- 15: Platine
- 16: Empfänger
- 17: Sender
- 18: Akku
- 19: Höhlung
- 20: Boden
- 21: Vergussmasse
- 22: Messvolumen

## Patentansprüche

1. Küchenmaschine (1) mit einem Gargefäß (3) und einem Zusatzteil (2) zum Aufsetzen auf das Gargefäß (3), wobei das Zusatzteil (2) eine Sensoranordnung (4) zur Ermittlung mindestens eines Betriebszustands in dem Gargefäß (3) aufweist, **dadurch gekennzeichnet, dass** das Zusatzteil (2) ein Messbecher mit einem einen Boden (20) aufweisenden Messvolumen (22) ist.

2. Küchenmaschine (1) nach Anspruch 1, **dadurch gekennzeichnet, dass** die Sensoranordnung (4) im Boden (20) angeordnet ist.

3. Küchenmaschine (1) nach einem der vorhergehenden Ansprüche, **gekennzeichnet durch** einen Sender (17) zur drahtlosen Übertragung von den ermittelten Betriebszustand charakterisierenden Daten an einen Empfänger (16) der Küchenmaschine (1).

4. Küchenmaschine (1) nach einem der vorhergehenden Ansprüche, **dadurch gekennzeichnet, dass** die Sensoranordnung (4) mindestens einen Sensor (14) aufweist, der in der Lage ist, den Füllstand (H) oder die Temperatur eines Gargutes im Gargefäß (3), die Anwesenheit eines Rührwerks (9), die Anwesenheit eines Rühraufsatzes (10), die Anwesenheit eines Einsatzbehälters (8) im Gargefäß (3) und/oder die Anwesenheit eines Zusatzteiles (2) zu ermitteln.

5. Küchenmaschine (1) nach Anspruch 4, **dadurch gekennzeichnet, dass** der mindestens eine Sensor (14) ein bildgebender Sensor und/oder ein RFID-Lesesensor, ein Infrarotsensor, ein Temperatursensor, ein Ultraschallsensor und/oder ein Gewichtssensor ist.

6. Küchenmaschine (1) nach einem der vorhergehenden Ansprüche, **dadurch gekennzeichnet, dass** das Zusatzteil (2) einen Sensor (14) aufweist, der in der Lage ist, eine eine Öffnung des Gargefäßes (3) überdeckende Position des Zusatzteils (2) zu ermitteln.

7. Küchenmaschine (1) nach einem der vorhergehenden Ansprüche, **dadurch gekennzeichnet, dass** das Zusatzteil (2) eine autarke Energieversorgung, bspw. in Form eines Akkumulators (18), aufweist, wobei insbesondere vorgesehen ist, dass der Akkumulator in der Funktionsstellung des Zusatzteils (2) auf dem Gargefäß geladen wird und/oder dass das Zusatzteil (2) einen Sender (17) zur drahtlosen Übertragung von den ermittelten Betriebszustand charakterisierenden Daten an einen Empfänger (16) der Küchenmaschine (1) aufweist.

## Claims

1. A kitchen appliance (1) with a cooking vessel (3) and an accessory (2) for being attached to the cooking vessel (3), wherein the accessory (2) features a sensor arrangement (4) for determining at least one operating state in the cooking vessel (3), **characterized in that** the accessory (2) is a measuring cup having a measuring volume (22) with a bottom (20).

2. The kitchen appliance (1) according to claim 1, **characterized in that** the sensor arrangement (4) is arranged in the bottom (20).

3. The kitchen appliance (1) according to one of the preceding claims, **characterized by** a transmitter (17) for the wireless transmission of data characterizing a detected operating state to a receiver (16) of the kitchen appliance (1).

4. The kitchen appliance (1) according to one of the preceding claims, **characterized in that** the sensor arrangement (4) comprises at least one sensor (14) capable of detecting the filling level (H) or the temperature of food to be cooked in the cooking vessel (3), the presence of an agitator (9), the presence of a mixer attachment (10), the presence of a drop-in container (8) in the cooking vessel (3) and/or the presence of the accessory (2).

5. The kitchen appliance (1) according to claim 4, **characterized in that** the at least one sensor (14) is an imaging sensor and/or an RFID read sensor, an infrared sensor, a temperature sensor, an ultrasonic sensor and/or a weight sensor.

6. The kitchen appliance (1) according to cone of the preceding claims, **characterized in that** the accessory (2) features a sensor (14) capable of detecting the position of the accessory (2), in which it covers an opening of the cooking vessel (3).

7. The kitchen appliance according to one of the preceding claims, **characterized in that** the accessory (2) features an autarkic energy supply, e.g. in the form of an accumulator (18), wherein the accumulator particularly is charged in the functional position of the accessory (2) on the cooking vessel, and/or that the accessory (2) features a transmitter (17) for the wireless transmission of data characterizing the detected operating state to a receiver (16) of the kitchen appliance (1).

## Revendications

1. Appareil de cuisine (1) avec un récipient de cuisson (3) et une pièce additionnelle (2) à placer sur le récipient de cuisson (3), dans lequel la pièce additionnelle (2) présente un agencement de capteur(s) (4) pour déterminer au moins un état de fonctionnement dans le récipient de cuisson (3), **caractérisé en ce que** la pièce additionnelle (2) est un récipient de mesure avec un volume de mesure (22) présentant un fond (20).

2. Appareil de cuisine (1) selon la revendication 1, **caractérisé en ce que** l'agencement de capteur(s) (4) est agencé dans le fond (20).

3. Appareil de cuisine (1) selon l'une des revendications précédentes, **caractérisé par** un émetteur (17) pour la transmission sans fil de données caractérisant l'état de fonctionnement déterminé, à un récepteur (16) de l'appareil de cuisine (1).

4. Appareil de cuisine (1) selon l'une des revendications précédentes, **caractérisé en ce que** l'agencement de capteur(s) (4) comprend au moins un capteur (14) qui est capable de déterminer le niveau de remplissage (H) ou la température d'un aliment à cuire dans le récipient de cuisson (3), la présence d'un agitateur (9), la présence d'un accessoire d'agitation (10), la présence d'un récipient insérable (8) dans le récipient de cuisson (3) et/ou la présence d'une pièce additionnelle (2).

5. Appareil de cuisine (1) selon la revendication 4, **caractérisé en ce que** l'au moins un capteur (14) est un capteur d'imagerie et/ou un capteur de lecture RFID, un capteur infrarouge, un capteur de température, un capteur ultrasonique et/ou un capteur de poids.

6. Appareil de cuisine (1) selon l'une des revendications précédentes, **caractérisé en ce que** la pièce additionnelle (2) comporte un capteur (14) qui est capable de déterminer une position de la pièce additionnelle (2) en recouvrement d'une ouverture du récipient de cuisson (3).

7. Appareil de cuisine (1) selon l'une des revendications précédentes, **caractérisé en ce que** la pièce additionnelle (2) présente une alimentation en énergie autonome, par exemple sous la forme d'un accumulateur (18), dans lequel il est prévu en particulier que l'accumulateur soit chargé dans la position fonctionnelle de la pièce additionnelle (2) sur le récipient de cuisson et/ou que la pièce additionnelle (2) présente un émetteur (17) pour la transmission sans fil de données caractérisant l'état de fonctionnement déterminé, à un récepteur (16) de l'appareil de cuisine (1).
